# EUROPEAN PATENT SPECIFICATION

(11) **EP 3 571 394 B1**
(45) Date of publication and mention of the grant of the patent: **27.01.2021**
(21) Application number: 17817694.7
(22) Date of filing: 05.12.2017
(51) Int. Cl.: F03D 7/04, F03D 7/02

(54) **INERTIAL RESPONSE FOR GRID STABILITY**
TRÄGHEITSREAKTION FÜR NETZSTABILITÄT
RÉPONSE INERTIELLE POUR STABILITÉ DE RÉSEAU ELECTRIQUE

(30) Priority: 24.02.2017 DE 102017203051
(43) Date of publication of application: 27.11.2019
(73) Proprietor: Siemens Gamesa Renewable Energy A/S, 7330 Brande (DK)
(72) Inventor: GREEN, Martin, 7500 Holstebroc (DK)
(74) Representative: Aspacher, Karl-Georg
(86) International application number: PCT/EP2017/081456
(87) International publication number: WO 2018/153526

(56) References cited:
- EP-A1- 3 096 004
- EP-A2- 2 108 828
- EP-A2- 2 393 179
- EP-A2- 2 416 007
- BACCINO FRANCESCO ET AL: "An Optimal Model-Based Control Technique to Improve Wind Farm Participation to Frequency Regulation", IEEE TRANSACTIONS ON SUSTAINABLE ENERGY, IEEE, USA, vol. 6, no. 3, 1 July 2015 (2015-07-01), pages 993-1003, XP011584826, ISSN: 1949-3029, DOI: 10.1109/TSTE.2014.2327243 [retrieved on 2015-06-17]

## Description

### Field of invention

The present invention relates to a method and to a wind park controller for controlling one or a plural of wind turbines of a wind park connected to a utility grid in case of a drop of a grid frequency and further relates to a wind park comprising the wind park controller.

### Art Background

In a case where consumers connected to a utility grid consume more energy than produced by energy production facilities and delivered to the utility grid, the frequency of the utility grid drops below a nominal value, for example 50 Hz or 60 Hz. To restore the nominal frequency of the utility grid, the energy production facilities have to deliver an increased amount of power, at least transiently. Thus, also wind power plants are requested to deliver primary frequency response in cases of changes of the frequency or derivative of the measured grid frequency. Conventionally, this is performed via the inertial response feature which involves to draw energy or power from the rotating masses in wind turbines.

Conventionally, each wind turbine in a wind park is requested to deliver a same amount of power to the utility grid, in order to restore the nominal frequency of the utility grid. Thus, conventionally, methods have focused on the functionality seen from a turbine perspective, however, the need for wind farm operator are in fact on a plant level.

It has been observed that the conventional inertial response methods have problems. In particular, restoration of the nominal grid frequency is not in all cases reliably and safely reached and also a recovery of the wind turbines to normal operations is conventionally not in all cases enabled within desired limits. An example of a primary frequency support is given in the article "An Optimal Model-Based Control Technique to Improve Wind Farm Participation to Frequency Regulation" by Braccino et al, IEEE Transactions on Sustainable Energy, Vol. 6, no 3, 993-1003, 01-07-2015.

Thus, there may be a need for a method and a controller for controlling a plural of wind turbines of a wind park connected to a utility grid in case of a drop of a grid frequency, wherein the above-mentioned problems are reduced.

### Summary of the Invention

This need may be met by the subject matter according to the independent claims. Advantageous embodiments of the present invention are described by the dependent claims.

According to an embodiment of the present invention it is provided a method for controlling one or a plural of wind turbines of a wind park connected to a utility grid, in particular in case of a drop of a grid frequency, the method comprising: controlling each of the wind turbines individually by an individual wind turbine control signal indicating an individual additional wind turbine power to be output by the respective wind turbine, wherein the individual wind turbine control signal is based on: a desired additional wind park (active) power to be supplied from the wind park to the utility grid and an operational characteristic of the respective wind turbine.

The method may be carried out by a wind park controller. The method may be implemented in software and/or hardware. The wind park may comprise a point of common coupling to which power output terminals of all wind turbines are connected. In particular, each wind turbine may comprise a wind turbine tower, a nacelle mounted on top of the wind turbine, wherein the nacelle harbours a rotation shaft which is rotatably supported in a bearing and which is connected to a rotor of a generator which generates, upon rotation of the rotation shaft, an AC power stream. The wind turbine may further comprise a converter, in particular AC-DC-AC converter, which is connected to output terminals of the AC generator, in order to convert a variable frequency AC power stream to a fixed frequency AC power stream which may have a frequency of for example 50 Hz or 60 Hz, corresponding to a nominal grid frequency.

Measurement equipment may be provided for measuring (for example at the point of common coupling) electrical properties of the utility grid, such as voltage, active power delivered, reactive power delivered and/or frequency in the point of common connection. The drop of the grid frequency may be detected using measurement signals which indicate the grid frequency and comparing the measured grid frequency with a nominal grid frequency. A drop of the grid frequency may be asserted, if, for example, the measured grid frequency deviates more than a threshold from the nominal grid frequency and/or when a derivative of the measured grid frequency is larger or smaller than another threshold. The need to deliver additional power to the utility grid (also referred to as inertial response) may be derived from a number of criteria involving the measured grid frequency, a nominal grid frequency, a derivative of a measured grid frequency and other electrical quantities.

The controlling each of the wind turbines may involve supplying the individual wind turbine control signal for example to a respective wind turbine controller which may control a number of components of the wind turbine, for example a wind turbine converter, a blade pitch adjustment system, a yawing system and potentially also other components.

Nominally, each wind turbine may provide a nominal power to the utility grid. In case an inertial response is required, the wind turbine may deliver more power than the nominal power to the utility grid. Thus, the individual additional wind turbine power may be considered as the excess of the power delivered by the wind turbine over the nominal power. To provide the individual additional wind turbine power, inertial energy stored in rotating masses of the wind turbine, in particular involving the rotation shaft and/or rotor blades, may be used. Thereby, the rotational speed of the rotating masses may decrease, in particular may decrease from a nominal rotational speed to a rotational speed lower than the nominal rotational speed. Alternatively or additionally, at least a portion of the individual additional wind turbine power may for example taken from an electrical storage installed at the wind turbine, for example a capacitor bank or an electrical accumulator. Thus, the individual additional wind turbine power may be taken from a number of sources, such as inertial energy, electrical storage, etc. In total, the desired additional wind park power may be requested to be delivered from the wind park to the utility grid. The desired additional wind park power is, according to the method, provided by requesting the individual additional wind turbine power levels from one or a plural of wind turbines. Thereby, the desired additional wind park power may be a desired additional power at the point of common coupling.

Herein, the method may account for power losses from the respective wind turbine output terminal to the point of common coupling and may adjust the individual additional wind turbine power level such that as a sum the desired additional wind park power is available at the point of common coupling.

Further, the operational characteristic of each of the wind turbines is taken into account to define the respective individual additional wind turbine power. The operational characteristics may indicate for example how much inertial response, thus how much additional wind turbine power, the respective wind turbine is capable to deliver, over what time range and so on. Further, environmental conditions of each wind turbine may be individually taken into account, in particular wind speed at the respective wind turbine. Further, the operational state of one or more wind turbine components may be taken into account, for example regarding its temperature, regarding its lifetime, wear, load, etc. Thereby, the individual additional wind turbine power attributed to the respective wind turbine may be requested such that the respective wind turbine is actually capable of providing the requested individual additional wind turbine power without hampering the operation of the components of the wind turbine.

Furthermore, the individual additional wind turbine power may be attributed to each of the wind turbines such that a recovery satisfies predetermined criteria, e.g. involving optimisation with respect to power loss. Thereby, the recovery may be performed after having supplied the individual additional wind turbine power for a particular time interval, after which the grid frequency may have been recovered to the nominal grid frequency. The recovery may involve re-accelerating the rotating masses of the respective wind turbine to the nominal rotational speed. Re-acceleration may be carried out by adjusting the blade pitch of the rotor blade and/or controlling the converter to deliver less power than during the inertial response time range. Before and after the inertial response performed by each of the individual wind turbines, the wind turbines may be operated in a normal operational state, involving a nominal rotational speed of the rotating masses, a nominal electrical power supplied to the utility grid. After the recovery process, the wind turbine may operate again under normal conditions.

The method may also involve to request the additional wind turbine power from different wind turbines for different time ranges. Thus, for example, a first wind turbine may be requested to deliver a first individual additional wind turbine power over a first time interval and a second wind turbine may be requested to deliver a second individual additional wind turbine power over a second time interval, wherein the first and second individual additional wind turbine powers are different and wherein also the first time interval and the second time interval are different. Thereby, an efficient support of the grid frequency may be achieved and additionally the recovery of the individual wind turbines to normal operation may be achieved in a reliable and safe manner.

According to the present invention, the individual wind turbine control signal is further based on the operational characteristics of all other wind turbines of the wind park. When the operational characteristics of all other wind turbines of the wind park are considered for deriving the individual wind turbine control signal of a wind turbine, the definition of the individual additional wind turbine powers may further be optimized. For example, the operational characteristics of a wind turbine in question may be compared to the operational characteristics of all other wind turbines which may enable to define the individual additional wind turbine power in an optimized manner. For example, when a temperature of a component of the wind turbine in question is lower than the temperature of this component of all other wind turbines, the wind turbine in question may be requested to deliver a higher amount of individual additional wind turbine power than the other wind turbines. Further, when the wind speed at the location where the wind turbine in question is located is higher than the wind speed at the locations where all other wind turbines are located, the wind turbine in question may be requested to deliver a higher amount of individual additional wind turbine power than the other wind turbines. Further, when the rotational speed of the wind turbine in question is higher than the rotational speed of all other wind turbines (assuming all have same inertia and have gears or no gears), the wind turbine in question may be requested to deliver a higher amount of individual additional wind turbine power to the grid than the other wind turbines. The skilled person will understand that parameters of the operational characteristics may be combined to form for example a target function which is to be optimized, e.g. considering inertia and rotational speed in combination. E.g. the energy stored in rotating masses may be considered to define which wind turbine should deliver what amount of additional power. According to an embodiment of the present invention, the individual wind turbine control signal is further based on an inertial response profile of the respective wind turbine, the inertial response profile in particular defining a maximally allowed additional power and/or a maximally allowed time range over which the maximal additional power is allowed to be output.

The inertial response profile may define (for each wind turbine individually for example) criteria the inertial response of the individual wind turbine should satisfy. These criteria may for example involve how much additional power is maximally allowed and/or a maximally allowed time range. The individual wind turbine control signal is then derived such that the operational borders defined by the inertial response profile are met. Thereby, a reliable and safe inertial response may be performed by the individual wind turbines.

According to the present invention, the individual wind turbine control signal is further based on a recovery profile of the respective wind turbine defining recovery parameters of a recovery process re-accelerating the wind turbine rotor, the recovery profile in particular defining a maximally allowed time range over which recovery should be completed or maximum allowed power drop, e.g. 10%. Further, the individual wind turbine control signals may be derived such that the operational borders set by the recovery profile may be met. The recovery profile may define operational parameters of a recovery method that involves re-accelerating the rotating masses of the individual wind turbines. For example, a recovery time may be considered to be the maximally allowed time range over which recovery should be completed (involving re-accelerating the rotating masses to a nominal rotational speed). Thereby, a reliable and safe recovery may be ensured. Further a maximally allowed acceleration of the rotor may be defined.

According to an embodiment of the present invention, the method further comprises considering individual power losses from an output terminal of the respective wind turbine to a point of common coupling to which the wind turbines are connected such that by controlling the wind turbines with the individual wind turbine control signals the desired additional wind park power is available for the utility grid at the point of common coupling.

When the output power of a particular wind turbine is transferred from the output terminal of the respective wind turbine to the point of common coupling, a power loss may occur involving dissipation of power such that the power delivered at the output terminal of the wind turbine is only partially transmitted to the point of common coupling. The individual power loss may be estimated using mathematical/physical models and/or measured. When the individual power losses of the wind turbines are considered, the individual wind turbine control signals can be derived such that the desired additional wind park power is in fact and actually available at the point of common coupling. Thereby, a grid frequency support may be ensured if there is sufficient turbine capacity (actuator capacity)

According to an embodiment of the present invention, the operational characteristic of each wind turbine includes at least one of: an individual capability of inertial response or inertial power, measured or estimated; an individual availability of inertial response or inertial power, measured or estimated; an individual temperature of at least one component, in particular a generator and/or a converter and/or a bearing of a wind turbine rotor, measured or estimated; an individual electrical condition, measured or estimated; an individual wind speed, measured or estimated; an individual rotor speed, measured or estimated of the respective wind turbine.

Based on a combination of the above-mentioned parameters defining the operational characteristics, the individual wind turbine control signals may be determined.

According to an embodiment of the present invention, the individual additional wind turbine power to be output by the respective wind turbine, as governed by individual wind turbine control signal, is the higher: the higher the individual capability of inertial response or inertial power is; and/or the higher the rotor speed is.

The individual additional wind turbine power to be output by the respective wind turbine, as governed by individual wind turbine control signal, may be the lower the temperature of the component is; and/or the higher the individual wind speed is.

Depending on the particular application and needs, the skilled person may define an expression or methodology to derive the individual additional wind turbine power from the desired additional wind park power and (different parameters defining the) operational characteristics or operational characteristics of all wind turbines.

According to an embodiment of the present invention, based on the operational characteristics of one or a plural of wind turbines and the desired additional wind park power, an optimisation is applied such that a target function is optimized, in particular minimized, the target function including at least one of: park power loss; individual recovery time and/or recovery energy loss of each wind turbine; individual load and/or wear of each wind turbine; individual generated noise.

The target function may be defined by the skilled person depending on the particular application, depending on the particular constitution of the wind turbines and/or the relative arrangements of wind turbines in the wind park. The park power loss may be considered to be the sum of power losses of the individual wind turbines from their respective output terminal to the point of common coupling. The recovery time may be minimized and/or the recovery energy loss may be minimized according to particular embodiments. Further load and/or wear and/or generated noise may be minimized. Further, a combination of recovery time, load and/or wear and/or generated noise and/or park power loss may be minimized.

The optimization may use electrical and/or mathematical models or a closed loop control and/or a method of system identification estimating power loss. A closed loop control may involve measurements of one or more electrical or mechanical or physical quantities which are comprised in the target function. The closed loop control may further comprise forming differences between the measured quantities and nominal quantities and supplying the differences or at least one difference to a controller, such as a PID controller. The controller may output a control signal which may be derived such that the respective difference (between measured and nominal quantity) decreases when the control signal is supplied to the respective wind turbine causing the wind turbine to adapt its power output.

According to an embodiment of the present invention, at least one wind turbines (or two or three wind turbines or four wind turbines or all wind turbines) are controlled (in case of one wind turbine only power loss compensation may be performed) to supply different amounts of power to the utility grid. Further, the time range over which the individual wind turbines supply their additional wind turbine powers may be different for at least two wind turbines or for all wind turbines. Thereby, the optimizations may further be improved.

According to an embodiment of the present invention, the desired additional wind park power comprises desired additional wind park active power, wherein the individual additional wind turbine power comprises an individual additional wind turbine active power.

According to an embodiment of the present invention, the method further comprises measuring a wind park output power, in particular at the point of common coupling; summing the desired additional wind park power and a park reference power to obtain a total desired wind park power; deriving a difference between the total desired wind park power and the measured wind park output power; supplying the difference to a closed loop controller; supplying an output signal of the controller and the operational characteristics of all wind turbines to a wind park power distribution algorithm, that is configured to generate the individual wind turbine control signals based thereon.

The park reference power may define the power which is nominally to be output by the wind park at the point of common coupling to the utility grid. The closed loop control may for example comprise a PI or PID controller. The wind park power distribution algorithm may be configured to perform a method of one of the embodiments as described above.

It should be understood that features, individually or in any combination, described, provided, explained or mentioned with respect to a method for controlling one or a plural of wind turbines of a wind park may also be applied to a wind park controller according to an embodiment of the present invention and vice versa.

According to an embodiment, a wind park controller is provided which is configured to perform a method according to one of the preceding embodiments.

Furthermore, a wind park is provided which comprises one or a plural of wind turbines and a wind park controller as described above.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise notified, in addition to any combination of features belonging to one type of subject matter also any combination between features relating to different subject matters, in particular between features of the method type claims and features of the apparatus type claims is considered as to be disclosed with this document.

Embodiments of the present invention are now described with respect to the accompanying drawings. The invention is not restricted to the illustrated or described embodiments.

### Brief Description of the Drawings

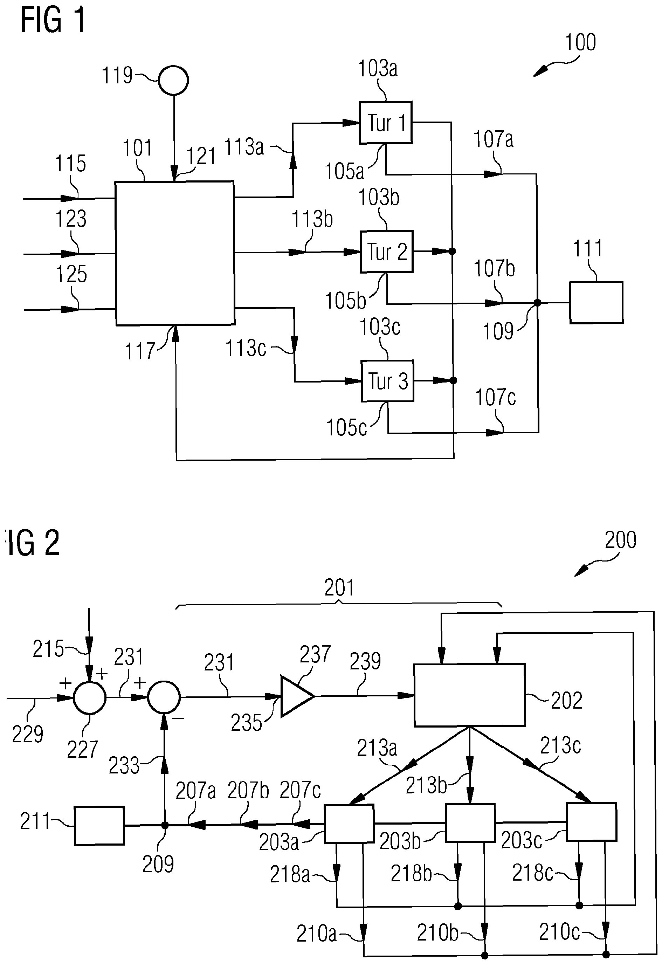

Fig. 1 schematically illustrates a wind park according to an embodiment of the present invention comprising a wind park controller according to an embodiment of the present invention which is configured to carry out a method for controlling one or a plural of wind turbines according to an embodiment of the present invention; and

Fig. 2 schematically illustrates a wind park according to an embodiment of the present invention comprising a wind park controller according to an embodiment of the present invention which is configured to carry out a method for controlling one or a plural of wind turbines according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

The wind park 100 schematically illustrated in Fig. 1 has a wind park controller 101 according to an embodiment of the present invention and further wind turbines 103a, 103b, 103c. The wind park may comprise a larger number of wind turbines, such as larger than 10 or larger than 100. At respective output terminals 105a, 105b, 105c, the wind turbines 103a, 103b, 103c, respectively, deliver their output power 107a, 107b, 107c to a point of common coupling 109 which is connected (optionally via one or more transformers) to a utility grid 111. The wind park controller 101 is configured, to carry out a method for controlling the wind turbines 103a, 103b, 103c, in case of a drop of a frequency of the utility grid 111. The drop of the grid frequency may be detected by measuring the grid frequency and/or a derivative of the grid frequency and comparing the measured frequency and/or derivative of the grid frequency with one or more thresholds.

The wind park controller 101 thereby supplies individual wind turbine control signals 113a, 113b, 113c to the wind turbines 103a, 103b, 103c, respectively, which indicate the individual additional wind turbine power to be output by the respective wind turbine. Thus, the total power 107a, 107b, 107c of the power output by the wind turbines 103a, 103b, 103c, respectively, is or may be a sum of a nominal wind turbine power and the individual additional wind turbine power as indicated by the respective individual wind turbine control signals 113a, 113b, 113c.

Thereby, the individual wind turbine control signal 113a, 113b, 113c is based on a desired additional wind park power as indicated by an inertial response park request signal 115 and is also further based on operational characteristics 117 of one or more wind turbines and in particular further based on profiles 123, 125. In the illustrated example, the operational characteristics of all wind turbines 103a, 103b, 103c are supplied to the wind park controller 101 and are considered for deriving the individual wind turbine control signals 113a, 113b, 113c.

The electrical characteristics of the point of common coupling 109, with respect to for example its frequency, may for example be determined by park measurement equipment 119 which may also deliver measurement values 121 to the wind park controller 101. The individual wind turbine control signals 113a, 113b, 113c may be further derived by the wind park controller 101 taking into account an inertial response profile setup 123 and an inertial response recovery profile setup 125 which may define operational borders of the inertial response and the recovery from the inertial response, respectively.

From the individual wind turbine output terminals 105a, 105b, 105c to the point of common coupling 109, a power loss may occur which may be taken into account for defining the individual wind turbine control signals 113a, 113b, 113c. Thus, the wind turbines may deliver an inertial response that they are individually capable of in response to a frequency derived measurement yielding a full response to the event and consequently an optimized but yet necessary recovery profile in order to recover the lost energy. This is however not the response necessary as what TSO's often require is a predefined response magnitude for a predefined length and time from an entire plant.

According to an embodiment of the present invention, the park response inertial response may optimize the delivery of primary inertial response as seen from a park level based on the requirements to the park response, yielding two primary beneficial factors:
1) Ensured level of park response to the requirements needed on park level compensating for park losses to the extent possible (wind generator limitations).
2) Distributing the needed inertial response on a park level amongst the turbines in an optimized manner, thus limiting the recovery profile to a minimum, in particular minimizing the recovery time. When looking at the inertial response over an entire park, turbines are experiencing different wind conditions and thus possibly different rotor speeds and consequently inertia in the rotor. Some turbines may therefore be able to deliver more power to the inertial response than others and also the recovery profile may look differently depending on the different rotational speeds of the rotors.

Based on, e.g., an individual estimation of the inertia or potential inertial power, the wind farm or plant controller may optimize the response using electrical/mathematical models or closed loop control. Thereby, some turbines may contribute more to the inertial response than others as they are subject to better conditions to do so than other turbines. The optimization may also take into account the electrical and temperature condition of the turbines in order to optimize the response even further.

According to embodiments of the present invention, the park level control may ensure that the desired inertial response output on a park level is delivered meaning if the desired inertial response level is less than the collective capability of the turbines, then the wind park controller may control the turbines to produce the requested inertial response on park level in the point of common coupling. If maximum possible inertial response from a turbine is requested, or close to it, the park control cannot necessarily compensate for the park losses.

The following embodiments are included in the present application:
a) One embodiment would be if each individual wind turbine would be able to compensate for park losses and adapting the response based on mathematical models (upstream compensation) .
b) One embodiment would be if the turbines were able to communicate between each other to collectively determine the optimal individual response.
c) One embodiment would be a fixed response based on individual wind speed or inertial estimation, with a compensation based on plant level measurement.

Fig. 2 schematically illustrates a wind park 200 comprising a wind park controller 201 according to an embodiment of the present invention which is configured to carry out a method according to an embodiment of the present invention. Features similar in structure and/or function in Figs. 1 and 2 are labelled with the same reference sign differing only in the first digit.

Embodiments of the present invention ensure that a specified inertial response at the park level is achieved compensating for losses in the park electrical network to the extent possible in the actuators (turbines) and the minimization of the impact (recovery period) of inertial response on a park level.

Fig. 2 thereby is a representation of a possible concept that may implement an embodiment of the present invention. There may be several other implementations that may yield the same closed loop response with e.g. with a feed forward.

The wind turbines 203a, 203b, 203c output their respective wind turbine powers 207a, 207b, 207c to the point of common coupling 209 which is connected to the utility grid 211. The turbines output the available inertia indicating signal 218a, 218b, 218c to the wind farm power distribution algorithm 202 comprised in the wind park controller 201. Further, the wind turbines 203a, 203b, 203c output operational characteristics, in particular temperatures of one or more components 210a, 210b, 210c to the wind farm power distribution algorithm 202.

Furthermore, the inertial response park request 215 is added using an additional element 227 with a park reference 229 to obtain a total requested park power signal 231. The actually delivered power to the utility grid at the point of common coupling 209 is measured as a signal 233 which is subtracted from the total requested park power output 231 to obtain an error signal 235 which is provided and supplied to a wind farm closed loop controller 237. The wind farm closed loop controller 237 for example comprises a P controller and/or an I controller and/or D controller component (or any other form of controller like e.g. linear-quadratic regulator (LQR)) in order to derive a control signal 239 at its output which is configured such as to decrease the error signal 235. The error signal is supplied to the wind farm power distribution algorithm 202 which also takes this control signal 239 into account to derive the individual wind turbine control signals 213a, 213b, 213c which are supplied to the turbines 203a, 203b, 203c, respectively.

When taking into account the requested inertial response in the reference for the park or plant controller, it may be ensured that the requested inertial response is delivered in the point of common coupling 209. This may eliminate the effects of the park electrical losses to yield a more definable and uniform response from the plant. This is of course dependent on the individual turbine's ability to deliver the necessary inertial response to compensate for those losses, i.e. turbines not in actuator limitation.

Embodiments of the present invention may introduce a smart distribution of the desired park response within the wind park. Each individual wind turbine in the park may in many cases see different wind and temperature conditions or simply there may be different turbine types with different capabilities which for example could be limited in some cases by noise restrictions (less available inertia). Each turbine may deliver an estimate of the available inertia in the turbine based on measurements of the rotor speed and the turbine setup. Along with one or several measurements of temperature, the turbine (or an aggregation thereof) the two may be used to distribute the requested park level response amongst the turbines in an optimum manner to reduce the recovery energy loss and/or recovery time in the park. Thereby, some turbines may contribute more to the inertial response than others as they are subject to better conditions to do so than other turbines.

The following example may illustrate embodiments of the present invention. The turbine 203a may have an available inertia of 6 and a temperature (may be several temperatures or an aggregation) of 10. The turbine 203b may have an available inertia of 4 and a temperature of 29. The turbine 203c may have an available inertia of 4 and a temperature of 89 which is near the high limit of that turbine.

The park is requested to deliver an inertial response of 8 and therefore the closed loop may in turn compensate for a park loss of 2 yielding a need of 10 from the turbines as the controller converges. The distribution algorithm may now control turbine 203a to contribute the most as it has the best conditions to contribute the most and the least from turbine 203c as it has the worst conditions to contribute the least. One such distribution could then be to request 7 from turbine 203a, to request 2 from turbine 203b and to request 1 from turbine 203c.

The exact amounts of additional wind turbine power requested from the different wind turbines may be derived due to an algorithm which may depend on the particular application and constitution of the wind park.

In the example as illustrated in Fig. 1, turbine 103a may indicate an inertial response availability of 3 and a low temperature, turbine 103b may indicate an inertial response availability of 2 and a medium temperature and the wind turbine 103c may indicate an inertial response availability of 1 and a high temperature. Accordingly, as an exemplary scenario, the park control 101 may request inertial response of 3 from turbine 103a, may request an inertial response of 1 from turbine 103b and may request an inertial response of 0 from turbine 103c.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for controlling one or a plural of wind turbines (103a, 103b, 103c) of a wind park (100, 200) connected to a utility grid (111, 211), in particular in case of a drop of a grid frequency, the method comprising:
controlling each of the wind turbines (103a, 103b, 103c) individually by an individual wind turbine control signal (113a, 113b, 113c) indicating an individual additional wind turbine power (107a, 107b, 107c) to be output by the respective wind turbine,
wherein the individual wind turbine control signal is based on:
a desired additional wind park power (115) to be supplied from the wind park to the utility grid and
an operational characteristic (117, 218, 210) of the respective wind turbine,
wherein the individual wind turbine control signal (113a, 113b, 113c) is further based on the operational characteristics of all other wind turbines of the wind park, **characterized in that** the individual wind turbine control signal (113a, 113b, 113c) is further based on a recovery profile (125) of the respective wind turbine defining recovery parameters of a recovery process re-accelerating the wind turbine rotor.

2. Method according to one of the preceding claims, wherein the individual wind turbine control signal (113a, 113b, 113c) is further based on a inertial response profile (123) of the respective wind turbine, the inertial response profile in particular defining a maximally allowed additional power and/or a maximally allowed time range over which the maximal additional power is allowed to be output.

3. Method according to one of the preceding claims, wherein the recovery profile defining a maximally allowed time range over which recovery should be completed or defining maximally allowed power drop.

4. Method according to one of the preceding claims, further comprising:
considering individual power losses from an output terminal (105a, 105b, 105c) of the respective wind turbine to a point of common coupling (109) to which the wind turbines are connected such that by controlling the wind turbines with the individual wind turbine control signals the desired additional wind park power (115) is available for the utility grid at the point of common coupling.

5. Method according to one of the preceding claims, wherein the operational characteristic of each wind turbine includes at least one of:
an individual capability of inertial response or inertial power, measured or estimated;
an individual availability (218) of inertial response or inertial power, measured or estimated;
an individual temperature (210) of at least one component, in particular a generator and/or a converter and/or a bearing of a wind turbine rotor, measured or estimated;
an individual electrical condition, measured or estimated;
an individual wind speed, measured or estimated;
an individual rotor speed, measured or estimated of the respective wind turbine.

6. Method according to one of the preceding claims, wherein the individual additional wind turbine power to be output by the respective wind turbine, as governed by individual wind turbine control signal, is the higher:
the higher the individual capability of inertial response or inertial power is; and/or
the higher the rotor speed is; and/or
the lower the temperature of the component is; and/or
the higher the individual wind speed is.

7. Method according to one of the preceding claims, wherein based on the operational characteristics of one or a plural of wind turbines and the desired additional wind park power, an optimisation is applied such that a target function is optimized, in particular minimized,
the target function including at least one of:
park power loss;
individual recovery time and/or recovery energy loss of each wind turbine;
collective recovery time and/or recovery energy loss of all wind turbines;
individual load and/or wear of each wind turbine;
individual generated noise.

8. Method according to one of the preceding claims, wherein the optimisation uses electrical and/or mathematical models or a closed loop control.

9. Method according to one of the preceding claims, wherein at least one, in particular at least two, wind turbines are controlled to supply different amounts of power to the utility grid.

10. Method according to one of the preceding claims, wherein the desired additional wind park power (115) comprises desired additional wind park active power, wherein the individual additional wind turbine power (107a, 107b, 107c) comprises an individual additional wind turbine active power.

11. Method according to one of the preceding claims, further comprising:
measuring a wind park output power (233), in particular at the point of common coupling (209);
summing the desired additional wind park power (215) and a park reference power (229) to obtain a total desired wind park power (231);
deriving a difference (235) between the total desired wind park power and the measured wind park output power;
supplying the difference (235) or an estimate of the park loss derived using a model of park electrical layout to a closed loop controller (237);
supplying an output signal (239) of the controller (237) and the operational characteristics (218, 210) of all wind turbines to a wind park power distribution algorithm (202), that is configured to generate the individual wind turbine control signals (213a, 213b, 213c) based thereon.

12. Wind park controller (101, 201), configured to perform a method according of one of the preceding claims.

13. Wind park (100, 200), comprising:
wind turbines (103a, 103b, 103c); and
a wind park controller (101) according to the preceding claim.

## Patentansprüche

1. Verfahren zum Steuern einer oder mehrerer Windenergieanlagen (103a, 103b, 103c) eines Windparks (100, 200), der mit einem Versorgungsnetz (111, 211) verbunden ist, insbesondere bei einem Abfall einer Netzfrequenz, wobei das Verfahren Folgendes umfasst:
individuelles Steuern jeder der Windenergieanlagen (103a, 103b, 103c) über ein individuelles Windenergieanlagensteuersignal (113a, 113b, 113c), das eine von der jeweiligen Windenergieanlage abzugebende individuelle Windenergieanlagen-Zusatzleistung (107a, 107b, 107c) angibt, wobei das individuelle Windenergieanlagensteuersignal auf Folgendem basiert:
einer Windpark-Soll-Zusatzleistung (115), die von dem Windpark an das Versorgungsnetz geliefert werden soll, und
einer Betriebseigenschaft (117, 218, 210) der jeweiligen Windenergieanlage,
wobei das individuelle Windenergieanlagensteuersignal (113a, 113b, 113c) ferner auf den Betriebseigenschaften aller anderen Windenergieanlagen des Windparks basiert,
**dadurch gekennzeichnet, dass** das individuelle Windenergieanlagensteuersignal (113a, 113b, 113c) ferner auf einem Erholungsprofil (125) der jeweiligen Windenergieanlage basiert, das Erholungsparameter eines Erholungsprozesses definiert, welcher den Windenergieanlagenrotor erneut beschleunigt.

2. Verfahren nach einem der vorhergehenden Ansprüche, wobei das individuelle Windenergieanlagensteuersignal (113a, 113b, 113c) ferner auf einem Trägheitsreaktionsprofil (123) der jeweiligen Windenergieanlage basiert, das insbesondere eine maximal zulässige Zusatzleistung und/oder einen maximal zulässigen Zeitbereich definiert, über den die maximale Zusatzleistung abgegeben werden darf.

3. Verfahren nach einem der vorhergehenden Ansprüche, wobei das Erholungsprofil einen maximal zulässigen Zeitbereich, über den die Erholung abgeschlossen sein muss, oder einen maximal zulässigen Leistungsabfall definiert.

4. Verfahren nach einem der vorhergehenden Ansprüche, das ferner Folgendes umfasst:
Berücksichtigen individueller Leistungsverluste von einem Ausgangsanschluss (105a, 105b, 105c) der jeweiligen Windenergieanlage zu einem Netzübergabepunkt (109), mit dem die Windenergieanlagen verbunden sind, so dass durch Steuern der Windenergieanlagen mit den individuellen Windenergieanlagensteuersignalen die Windpark-Soll-Zusatzleistung (115) an dem Netzübergabepunkt für das Versorgungsnetz zur Verfügung steht.

5. Verfahren nach einem der vorhergehenden Ansprüche, wobei zu der Betriebseigenschaft jeder Windenergieanlage mindestens eine der folgenden gehört:
eine individuelle Fähigkeit zur Trägheitsreaktion oder Trägheitskraft, gemessen oder geschätzt,
eine individuelle Verfügbarkeit (218) von Trägheitsreaktion oder Trägheitskraft, gemessen oder geschätzt,
eine individuelle Temperatur (210) mindestens einer Komponente, insbesondere eines Generators und/oder eines Umrichters und/oder eines Lagers eines Windenergieanlagenrotors, gemessen oder geschätzt,
ein individueller elektrischer Zustand, gemessen oder geschätzt,
eine individuelle Windgeschwindigkeit, gemessen oder geschätzt,
eine individuelle Rotordrehzahl, gemessen oder geschätzt, der jeweiligen Windenergieanlage.

6. Verfahren nach einem der vorhergehenden Ansprüche, wobei die laut dem individuellen Windenergieanlagensteuersignal von der jeweiligen Windenergieanlage abzugebende individuelle Windenergieanlagen-Zusatzleistung umso höher ist,
je höher die individuelle Fähigkeit zur Trägheitsreaktion oder Trägheitskraft und/oder
je höher die Rotordrehzahl und/oder
je geringer die Temperatur der Komponente und/oder je höher die individuelle Windgeschwindigkeit ist.

7. Verfahren nach einem der vorhergehenden Ansprüche, wobei auf der Grundlage der Betriebseigenschaften einer oder mehrerer Windenergieanlagen und der Windpark-Soll-Zusatzleistung eine Optimierung so angewendet wird, dass eine Zielfunktion optimiert, insbesondere minimiert wird,
wobei zu der Zielfunktion mindestens eins der folgenden gehört:
Parkleistungsverlust,
individuelle Erholungsdauer und/oder individueller Erholungsenergieverlust jeder Windenergieanlage,
gesamte Erholungsdauer und/oder gesamter Erholungsenergieverlust aller Windenergieanlagen,
individuelle Belastung und/oder Abnutzung jeder Windenergieanlage,
individueller erzeugter Lärm.

8. Verfahren nach einem der vorhergehenden Ansprüche, wobei die Optimierung elektrische und/oder mathematische Modelle oder einen geschlossenen Regelkreis benutzt.

9. Verfahren nach einem der vorhergehenden Ansprüche, wobei mindestens eine, insbesondere mindestens zwei Windenergieanlagen so gesteuert werden, dass sie unterschiedliche Leistung an das Versorgungsnetz abgeben.

10. Verfahren nach einem der vorhergehenden Ansprüche, wobei die Windpark-Soll-Zusatzleistung (115) Windpark-Soll-Zusatzwirkleistung umfasst, wobei die individuelle Windenergieanlagen-Zusatzleistung (107a, 107b, 107c) eine individuelle Windenergieanlagen-Zusatzwirkleistung umfasst.

11. Verfahren nach einem der vorhergehenden Ansprüche, das ferner Folgendes umfasst:
Messen einer Windparkausgangsleistung (233), insbesondere am Netzübergabepunkt (209),
Summieren der Windpark-Soll-Zusatzleistung (215) und einer Park-Referenzleistung (229) zum Gewinnen einer Windpark-Soll-Gesamtleistung (231),
Ableiten einer Differenz (235) zwischen der Windpark-Soll-Gesamtleistung und der gemessenen Windparkausgangsleistung,
Zuführen der Differenz (235) oder einer Schätzung des unter Verwendung eines Modells des elektrischen Parkaufbaus abgeleiteten Parkverlusts zu einer Regeleinrichtung (237),
Zuführen eines Ausgangssignals (239) der Steuerung (237) und der Betriebseigenschaften (218, 210) aller Windenergieanlagen zu einem Windpark-Leistungsverteilungsalgorithmus (202), der so konfiguriert ist, dass er auf dieser Grundlage die individuellen Windenergieanlagensteuersignale (213a, 213b, 213c) erzeugt.

12. Windparksteuerung (101, 201), die so konfiguriert ist, dass sie ein Verfahren nach einem der vorhergehenden Ansprüche durchführt.

13. Windpark (100, 200), der Folgendes umfasst:
Windenergieanlagen (103a, 103b, 103c) und
eine Windparksteuerung (101) nach dem vorhergehenden Anspruch.

## Revendications

1. Procédé de commande d'une ou de plusieurs éolienne(s) (103a, 103b, 103c) d'un parc éolien (100, 200) relié à un réseau électrique (111, 211), en particulier en cas de chute d'une fréquence de réseau, le procédé comprenant :
commander chacune des éoliennes (103a, 103b, 103c) individuellement par un signal de commande d'éolienne individuel (113a, 113b, 113c) indiquant une puissance d'éolienne supplémentaire individuelle (107a, 107b, 107c) devant être délivrée en sortie par l'éolienne respective,
dans lequel le signal de commande d'éolienne individuel est basé sur :
une puissance de parc éolien supplémentaire souhaitée (115) devant être fournie à partir du parc éolien au réseau électrique et
une caractéristique de fonctionnement (117, 218, 210) de l'éolienne respective,
dans lequel le signal de commande d'éolienne individuel (113a, 113b, 113c) est en outre basé sur les caractéristiques de fonctionnement de toutes les autres éoliennes du parc éolien,
**caractérisé en ce que**
le signal de commande d'éolienne individuel (113a, 113b, 113c) est en outre basé sur un profil de récupération (125) de l'éolienne respective définissant des paramètres de récupération d'un procédé de récupération ré-accélérant le rotor d'éolienne.

2. Procédé selon l'une des revendications précédentes, dans lequel le signal de commande d'éolienne individuel (113a, 113b, 113c) est en outre basé sur un profil de réponse inertielle (123) de l'éolienne respective, le profil de réponse inertielle définissant en particulier une puissance supplémentaire maximale autorisée et/ou une plage de temps maximale autorisée sur laquelle la puissance supplémentaire maximale est autorisée à être délivrée en sortie.

3. Procédé selon l'une des revendications précédentes, dans lequel le profil de récupération définissant une plage de temps maximale autorisée sur laquelle la récupération devrait être achevée ou définissant une chute de puissance maximale autorisée.

4. Procédé selon l'une des revendications précédentes, comprenant en outre :
prendre en compte des pertes de puissance individuelles d'une borne de sortie (105a, 105b, 105c) de l'éolienne respective à un point de couplage commun (109) auquel les éoliennes sont reliées de sorte qu'en commandant les éoliennes avec les signaux de commande d'éolienne individuels la puissance de parc éolien supplémentaire souhaitée (115) soit disponible pour le réseau électrique au point de couplage commun.

5. Procédé selon l'une des revendications précédentes, dans lequel la caractéristique de fonctionnement de chaque éolienne comporte au moins l'une parmi :
une capacité individuelle de réponse inertielle ou de puissance inertielle, mesurée ou estimée ;
une disponibilité individuelle (218) de réponse inertielle ou de puissance inertielle, mesurée ou estimée ;
une température individuelle (210) d'au moins un composant, en particulier un générateur et/ou un convertisseur et/ou un palier d'un rotor d'éolienne, mesurée ou estimée ;
une condition électrique individuelle, mesurée ou estimée ;
une vitesse de vent individuelle, mesurée ou estimée ;
une vitesse de rotor individuelle, mesurée ou estimée de l'éolienne respective.

6. Procédé selon l'une des revendications précédentes, dans lequel plus la puissance d'éolienne supplémentaire individuelle devant être délivrée en sortie par l'éolienne respective, telle que régie par le signal de commande d'éolienne individuel, est élevée :
plus la capacité individuelle de réponse inertielle ou de puissance inertielle est élevée ; et/ou
plus la vitesse du rotor est élevée ; et/ou
plus la température du composant est faible ; et/ou
plus la vitesse de vent individuelle est élevée.

7. Procédé selon l'une des revendications précédentes, dans lequel sur la base des caractéristiques de fonctionnement d'une ou de plusieurs éolienne(s) et de la puissance de parc éolien supplémentaire souhaitée, une optimisation est appliquée de sorte qu'une fonction cible soit optimisée, en particulier minimisée,
la fonction cible comportant au moins l'un(e) parmi :
une perte de puissance de parc ;
un temps de récupération individuel et/ou une perte d'énergie de récupération individuelle de chaque éolienne ;
un temps de récupération collectif et/ou une perte d'énergie de récupération collective de toutes les éoliennes ;
une charge et/ou usure individuelle de chaque éolienne ;
un bruit généré individuel.

8. Procédé selon l'une des revendications précédentes, dans lequel l'optimisation utilise des modèles électriques et/ou mathématiques ou une commande en boucle fermée.

9. Procédé selon l'une des revendications précédentes, dans lequel au moins une, en particulier au moins deux, éolienne(s) est/sont commandée(s) pour fournir différentes quantités de puissance au réseau électrique.

10. Procédé selon l'une des revendications précédentes, dans lequel la puissance de parc éolien supplémentaire souhaitée (115) comprend une puissance active de parc éolien supplémentaire souhaitée, dans lequel la puissance d'éolienne supplémentaire individuelle (107a, 107b, 107c) comprend une puissance active d'éolienne supplémentaire individuelle.

11. Procédé selon l'une des revendications précédentes, comprenant en outre :
mesurer une puissance de sortie de parc éolien (233), en particulier au point de couplage commun (209) ;
additionner la puissance de parc éolien supplémentaire souhaitée (215) et une puissance de référence de parc (229) pour obtenir une puissance de parc éolien souhaitée totale (231) ;
dériver une différence (235) entre la puissance de parc éolien souhaitée totale et la puissance de sortie de parc éolien mesurée ;
fournir la différence (235) ou une estimation de la perte de parc dérivée en utilisant un modèle de disposition électrique de parc à une unité de commande en boucle fermée (237) ;
fournir un signal de sortie (239) de l'unité de commande (237) et les caractéristiques de fonctionnement (218, 210) de toutes les éoliennes à un algorithme de distribution de puissance de parc éolien (202), qui est configuré pour générer les signaux de commande d'éolienne individuels (213a, 213b, 213c) sur la base de ceux-ci.

12. Unité de commande de parc éolien (101, 201), configurée pour mettre en œuvre un procédé selon l'une des revendications précédentes.

13. Parc éolien (100, 200), comprenant :
des éoliennes (103a, 103b, 103c) ; et
une unité de commande de parc éolien (101) selon la revendication précédente.
